# EUROPEAN PATENT APPLICATION

(11) **EP 4 239 103 A1**
(43) Date of publication of application: **06.09.2023**
(21) Application number: 22159653.9
(22) Date of filing: 02.03.2022
(51) Int. Cl.: C25B 1/04, C01B 3/02, C01C 1/04, C25B 15/021, C25B 15/08, F03D 9/19

(54) **OFFSHORE SYSTEM FOR PRODUCING ELECTRIC ENERGY, HYDROGEN AND OTHER WIND ENERGY-DERIVED PRODUCTS**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

It is described an offshore system configured to produce electric energy by wind energy from at least one wind turbine (1), and to produce hydrogen and other wind energy-derived products. The system comprises the wind turbine (1); a desalination unit (2); and a water electrolysis unit (3). The system further comprises at least one of an integrated control unit (6) configured to control the offshore system, and a waste heat recovery unit (5) configured to generate electrical energy by waste heat from at least one of the water electrolysis unit (3) and the integrated control unit (6).

## Description

### Field of invention

The present invention relates to an offshore system which is configured to produce electric energy by wind energy from at least one wind turbine, and to produce hydrogen and other wind energy-derived products.

With increased renewable energy demand to meet global decarbonization targets, onshore land availability, scalability of generation and system integration requirements have evolved as key bottleneck for fast deployment of additional capacities. Hence, countries and associations have started investigating more utilization of offshore areas for the purpose of energy generation. While for the last years offshore renewable energy generation has been primarily based on generating electricity, now the development enters the sphere of offshore hydrogen generation. Within this track, several variations are being developed, while none of these have proven so far to be the most competitive. These variations include e.g., wind turbine and electrolyser units, wind turbine arrays to electrolyser platforms, wind turbines with electricity grid to shore and electrolyser onshore. Some countries have even started developing concepts for energy islands to build electrolyser plants on them. Some of these concepts include further use cases on the energy islands, such as e.g., steel plants. Until today, the energy efficiency is not satisfactory.

### Summary of the Invention

There may be a need for an offshore system with improved efficiency. This need may be met by the subject matter according to the independent claim. The present invention is further developed as set forth in the dependent claims.

According to an aspect of the invention, an offshore system is provided, which is configured to produce electric energy by wind energy from at least one wind turbine and to produce hydrogen. The offshore system comprises the wind turbine; a desalination unit configured to desalinate water from the sea; and a water electrolysis unit configured to produce hydrogen by desalinated water from the desalination unit and at least temporarily by the electric energy from the wind turbine. The system further comprises at least one of the following units: an integrated control unit configured to control the offshore system; and a waste heat recovery unit configured to generate electrical energy by waste heat from at least one of the water electrolysis unit and the integrated control unit. Preferably, the waste heat recovery unit is preferably configured to perform an organic rankine cycle (ORC). The offshore system advantageously forms a hybrid energy facility, in which the energy availability as well as technical (grid congestion, energy transmission) and commercial (e.g., specific transmission cost, specific production costs) constraints can be scheduled and optimized by the integrated control unit.

The water electrolysis unit is configured to produce hydrogen at least temporarily by the electric energy from the wind turbine, which means that the water electrolysis unit can be operated by power generated by the waste heat recovery unit and/or by power from an additional battery unit at other times where the wind power is low.

In an embodiment, the offshore system further comprises at least one of the following units: an ammonia synthesis unit configured to produce ammonia by hydrogen from the water electrolysis unit; and a battery unit configured to store electrical energy. The waste heat recovery unit can be configured to generate electrical energy also by waste heat from the ammonia synthesis unit and/or the battery unit. The offshore system advantageously has a bonus value as ammonia and/or electric power can additionally be produced.

In an embodiment, the integrated control unit includes a data center configured to schedule and allocate an energy flow between the wind turbine and the different units to optimize the efficiency of the offshore system.

In an embodiment, at least one of the desalination unit, the water electrolysis unit, the ammonia synthesis unit, the waste heat recovery unit, the integrated control unit, and the battery unit is housed in an individual housing. Thereby, a highly flexible and modular offshore system can be provided for multiple use cases. An existing offshore system can readily be retrofitted without high costs.

In an embodiment, the offshore system further comprises an offshore platform having a plurality of receiving devices, wherein each housing is removable attached to a respective receiving device so that a kind of plug-and-play can be achieved. In an embodiment, the receiving devices are compatibly configured to receive any housing of at least two different units including the desalination unit, the water electrolysis unit, the ammonia synthesis unit, the waste heat recovery unit, the integrated control unit, and the battery unit. Any existing offshore system can readily and flexibly be retrofitted in accordance with the use case.

In an embodiment, each housing can be formed as a modular container. In particular, the housings of different units can have the same size and/or shape.

In an embodiment, an array of at least two similar units is provided so that the offshore system is scalable in an easy manner in accordance with the use case.

In an embodiment, at least one of the desalination unit, the water electrolysis unit, the ammonia synthesis unit, the waste heat recovery unit, the integrated control unit, and the battery unit comprises a converter device, in particular a rectifier device configured to rectify an AC voltage from the wind turbine into a DC voltage so that the offshore system is scalable in an easy manner in accordance with the use case.

In an embodiment, the offshore system further comprises a hybrid transmission line configured to transport electric power and/or electric data together with at least one of hydrogen, ammonia, hot water, steam and pure water from/to the offshore system and to/from the shore. Such kind of hybrid transmission line offers additional use cases without being more costly.

Advantageously, the design of the offshore platform flexibly enables use cases, all with the purpose of reduced overall energy transmission and conversion losses, interchangeability of systems and creation of synergies of several systems. In addition, by integrating the integrated control unit as a hybrid platform controller for the optimal operation of the units, the system integration capabilities into the existing energy infrastructures (gas, power, heat, hydrogen, ...) of new intermittent renewable energy capacities is increased, and hence more renewable energy capacity can be developed. Especially, the waste heat utilization in an offshore application creates new use cases.

The present invention achieves a waste heat utilization with the waste heat recovery unit as an electricity recuperation system, and an integrated control by the integrated control unit to optimize the hybrid energy facility in terms of energy availability as well as technical (grid congestion, energy transmission) and commercial (e.g., specific transmission cost, specific production costs) constraints. The present invention considers all these issues and hence provides an optimized utilization and energy efficiency.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

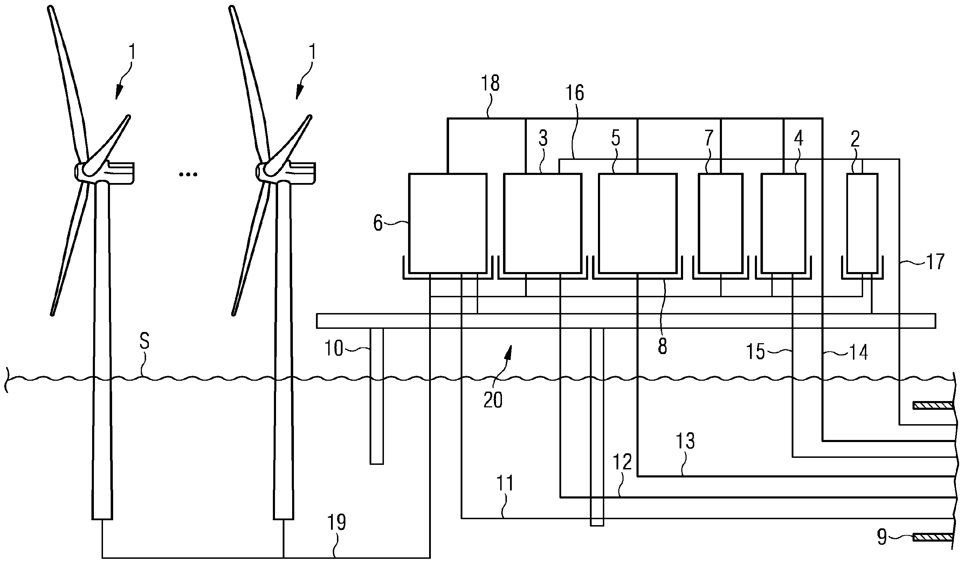

- Fig. 1: shows an offshore system according to an embodiment.

### Detailed Description

The illustration in the drawing is schematically.

**Fig. 1** shows an offshore system according to an embodiment. The offshore system is configured to produce electric energy by wind energy from at least one wind turbine 1, and to produce hydrogen. In the present embodiment, the offshore system comprises an array of fixed or floating wind turbines 1 and an offshore platform 20 near the wind turbines 1. The offshore system can alternatively be floating or installed on an artificial island.

The offshore system further comprises a desalination unit 2 configured to desalinate water from the sea. A seawater intake pipe 10 is provided to supply sea water to the desalination unit 2.

The offshore system further comprises a water electrolysis unit 3 configured to produce hydrogen by desalinated water from the desalination unit 2. A desalinated water pipe 16 is provided to supply desalinated water from the desalination unit 2 to the water electrolysis unit 3. The water electrolysis unit 3 is configured to produce hydrogen at least temporarily by the electric energy from the wind turbine 1. The term "temporarily" means that the water electrolysis unit 3 can be operated by power generated by another power source such as a waste heat recovery unit 5 and/or a battery unit 7 at other times where the wind power is low. The waste heat recovery unit 5 and the battery unit 7 are described later in detail.

The offshore system comprises an integrated control unit 6 configured to control the offshore system. The offshore system is a flexible system and configured to further comprise optionally at least one of an ammonia synthesis unit 4 configured to produce ammonia by hydrogen from the water electrolysis unit 3, the battery unit 7 configured to store electrical energy, and the waste heat recovery unit 5 configured to generate electrical energy by waste heat from at least one of the water electrolysis unit 3, the ammonia synthesis unit 4, the integrated control unit 6 and the battery unit 7. A waste heat pipe 18 is provided to supply the waste heat from the water electrolysis unit 3, the ammonia synthesis unit 4, and the integrated control unit 6 and the battery unit 7 to the waste heat recovery unit 5.

In an embodiment, the waste heat recovery unit 5 is configured to perform an organic rankine cycle, which is abbreviated by ORC. The waste heat recovery unit 5 can comprise one or more additional heat storages (buffer storages), heat pumps and/or electric steam boilers to reach relatively high operating temperatures. By the waste heat recovery unit 5, waste heat from the integrated control unit 6 and the water electrolysis unit 3 can be used to produce electricity in addition to that which is produced by the wind turbine 1 so that the overall energy efficiency of the offshore system is increased without the need to transport waste heat to shore in very costly heat pipes. In addition, this waste heat can be stored easily on the offshore platform 20 in heat storages and hence, this enables shift of electricity production to times of low wind availability.

An electric cable 19 is provided for supplying electric energy in the shape of an AC- or DC-voltage to the offshore platform 20, in particular to the desalination unit 2, the water electrolysis unit 3, the ammonia synthesis unit 4, the waste heat recovery unit 5, the integrated control unit 6, and the battery unit 7.

Sea water can optionally be supplied via the seawater intake pipe 10 to the integrated control unit 6 for cooling purposes.

The ammonia synthesis unit 4 can optionally comprise a storage tank for the produced ammonia, and a dispenser for dispensing the produced ammonia to a transport ship.

The integrated control unit 6 can include a data center configured to schedule and allocate an energy flow between the wind turbine 1 and the different units 2, 3, 4, 5, 6, 7 in accordance with the availability of wind energy and operational requirements of the individual units.

At least one of the desalination unit 2, the water electrolysis unit 3, the ammonia synthesis unit 4, the waste heat recovery unit 5, the integrated control unit 6, and the battery unit 7 can be housed in an individual housing. In an embodiment, each housing can be formed as a modular container. The offshore platform 20 can comprise a plurality of receiving devices 8 which are schematically depicted in Fig. 1. In particular, the housings of different units can have the same size and/or shape so that a kind of container standard is achieved.

The offshore platform 20 in the embodiment of Fig. 1 has a plurality of receiving devices 8, wherein each housing is removable attached to a respective receiving device 8.
the receiving devices 8 can be compatibly configured to receive any housing of at least two different units including the desalination unit 2, the water electrolysis unit 3, the ammonia synthesis unit 4, the waste heat recovery unit 5, the integrated control unit 6, and the battery unit 7. Thereby, a more modular offshore system is achieved.

It is possible to provide an array of at least two similar units 2, 3, 4, 5, 6, 7, for example an array of two desalination units 2, two water electrolysis unit 3, and so on.

At least one of the desalination unit 2, the water electrolysis unit 3, the ammonia synthesis unit 4, the waste heat recovery unit 5, the integrated control unit 6, and the battery unit 7 can comprise a converter device, in particular a rectifier device configured to rectify an AC voltage from the wind turbine 1 into a DC voltage.

The offshore system can have a plurality of cables and pipes to be connected onshore. In the embodiment of Fig. 1, there is a data cable 11 from the integrated control unit 6 to shore, a hydrogen pipe 12 from the water electrolysis unit 3 to shore, an electric cable 13 from the waste heat recovery unit 5 to shore or a public grid, a waste heat pipe 14 from the desalination unit 2, the water electrolysis unit 3, the ammonia synthesis unit 4, and the integrated control unit 6 to shore, an ammonia pipe 15 from the ammonia synthesis unit 4 to shore, and a desalinated water pipe 17 from the desalination unit 2 to shore. The waste heat pipe 14 can transport the waste heat to the shore, which is not consumed in the waste heat recovery unit 5. Such waste heat is not supplied to the waste heat pipe 18.

Instead of the data cable 11, a wireless data transmission to the shore is conceivable as an alternative.

The electric cable 13 can ensure a maximum uptime of the units in standby, at partial load and optionally at full load.

The offshore system can further comprise a hybrid transmission line 9 configured to transport electric power and/or electric data together with at least one of hydrogen, ammonia, hot water, steam and pure water from/to the offshore system and to/from the shore. The hybrid transmission line 9 can comprise the data cable 11, the hydrogen pipe 12, the electric cable 13, the waste heat pipe 14, the ammonia pipe 15, and the desalinated water pipe 17. If the offshore system is scaled to allow for multiple use cases, such kind of hybrid transmission line 9 offers additional use cases without being more costly, since the individual transmission capacities are not matching 1:1 to the renewable energy generation capacity but rather covering only a fraction (e.g., 1:10) of it, which results in overall minimal cost of renewable energy.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. An offshore system configured to produce electric energy by wind energy from at least one wind turbine (1) and to produce hydrogen, the system comprising:
the wind turbine (1) configured to generate the electric energy;
a desalination unit (2) configured to desalinate water from the sea;
a water electrolysis unit (3) configured to produce hydrogen by desalinated water from the desalination unit (2) and at least temporarily by the electric energy from the wind turbine (1);
the system further comprising at least one of:
an integrated control unit (6) configured to control the offshore system; and
a waste heat recovery unit (5) configured to generate electrical energy by waste heat from at least one of the water electrolysis unit (3) and the integrated control unit (6) .

2. The offshore system according to the preceding claim, further comprising at least one of the following units:
an ammonia synthesis unit (4) configured to produce ammonia by hydrogen from the water electrolysis unit (3); and
a battery unit (7) configured to store electrical energy.

3. The offshore system according to any one of the preceding claims, wherein
the integrated control unit (6) includes a data center configured to schedule and allocate an energy flow between the wind turbine (1) and the different units (2, 3, 4, 5, 6, 7) .

4. The offshore system according to any one of the preceding claims, wherein
at least one of the desalination unit (2), the water electrolysis unit (3), the ammonia synthesis unit (4), the waste heat recovery unit (5), the integrated control unit (6), and the battery unit (7) is housed in an individual housing.

5. The offshore system according to the preceding claim, further comprising:
an offshore platform (20) having a plurality of receiving devices (8), wherein each housing is removable attached to a respective receiving device (8).

6. The offshore system according to the preceding claim, wherein
the receiving devices (8) are compatibly configured to receive any housing of at least two different units including the desalination unit (2), the water electrolysis unit (3), the ammonia synthesis unit (4), the waste heat recovery unit (5), the integrated control unit (6), and the battery unit (7) .

7. The offshore system according to any one of claims 4 to 6, wherein
an array of at least two similar units (2, 3, 4, 5, 6, 7) is provided.

8. The offshore system according to any one of claims 4 to 7, wherein
the housing is formed as a modular container.

9. The offshore system according to any one of the preceding claims, wherein
at least one of the desalination unit (2), the water electrolysis unit (3), the ammonia synthesis unit (4), the waste heat recovery unit (5), the integrated control unit (6), and the battery unit (7) comprises a converter device, in particular a rectifier device configured to rectify an AC voltage from the wind turbine (1) into a DC voltage.

10. The offshore system according to any one of the preceding claims, further comprising:
a hybrid transmission line (9) configured to transport electric power and/or electric data together with at least one of hydrogen, ammonia, hot water, steam and pure water from/to the offshore system and to/from the shore.

11. The offshore system according to any one of the preceding claims, wherein
the waste heat recovery unit (5) is configured to perform an organic rankine cycle (ORC).

12. The offshore system according to any one of the preceding claims, wherein
the waste heat recovery unit (5) is configured to further generate electrical energy by waste heat from the ammonia synthesis unit (4) and the battery unit (7).
